# EUROPEAN PATENT SPECIFICATION

(11) **EP 4 290 106 B1**
(45) Date of publication and mention of the grant of the patent: **09.04.2025**
(21) Application number: 23169222.9
(22) Date of filing: 21.04.2023
(51) Int. Cl.: F16L 5/04

(54) **A SMOKE SHAFT ARRANGEMENT AND A FABRICATING METHOD**
RAUCHSCHACHTANORDNUNG UND HERSTELLUNGSVERFAHREN
AGENCEMENT D'UN CONDUIT DE FUMÉE ET PROCÉDÉ DE FABRICATION

(30) Priority: 25.04.2022 FI 20225339
(43) Date of publication of application: 13.12.2023
(73) Proprietor: Kera Group Oy, 16300 Orimattila (FI)
(72) Inventor: Tukiainen, Jouni, 16300 Orimattila (FI)
(74) Representative: LEITZINGER OY

(56) References cited:
- EP-A2- 1 770 330

## Description

### Field of the invention

The invention relates to a smoke shaft arrangement and a method for fabricating a smoke shaft arrangement.

### Background of the invention

Smoke shafts are used in buildings for removing smoke, heat and combustion products from one or more fire compartments of the building, such as floors of the building, to the outside of the building. Smoke, heat and combustion products may be produced in case of fire, for example, and become hazardous for the people inside the building. If smoke, heat and combustion products are not removed by smoke shafts, these might be guided to a stairway and disable it from serving as an escape route. The same smoke shaft may serve a single fire compartment or plurality of different fire compartments. In multi-storey buildings, the smoke shafts may for example provide a duct from lower parts of the building through intermediate floors and further up through the roof possibly having openings leading to different floors for thus being able to remove smoke, heat and combustion products from different floors. The upper end of the smoke shaft has an opening, which may be covered with a hatch. The hatch may comprise a window e.g. so that the smoke shaft can provide light into the building. This is advantageous particularly if the smoke shaft lower end opens into a room right below the roof.

Such smoke shafts are known which are built from tubular sections by piling them on top of each other. Such a smoke shaft is typically placed to extend vertically through openings formed in floors and the roof of the building. In fabrication of the smoke shaft, a gap is formed between a smoke shaft section and side faces of an the opening formed in the floor or roof through which the smoke shaft section is to extend. Free passage of air or other substances inside the gap in vertical direction needs to be prevented. This is advantageously done by a seal structure. A seal structure can be referred to as a penetration seal. This must be done in a safe manner, and advantageously such that possible transmission of heat does not cause problems in case of fire. A known way has been to fill the gap with concrete or other mass or mineral wool, for example.

EP1770330A2 shows respectively an arrangement and a method according to the preamble of claim 1 and the preamble of claim 14.

### Brief description of the invention

The object of the invention is to introduce an improved solution for a smoke shaft arrangements, which is improved in terms of installation efficiency and tightness and heat insulation properties.

An object is, *inter alia,* to achieve a structure with good heat insulation and tightness against passage of air or gases in a gap formed between a smoke shaft and the sides of an opening through which the smoke shaft extends. An object is, inter alia, to achieve a structure that is good in this respect with a swift and efficient method.

An object is particularly to introduce a solution by which one or more of the above-mentioned problems of prior art and/or drawbacks discussed or implied elsewhere in the description can be solved.

It is brought forward a new smoke shaft arrangement comprising
a floor or roof structure comprising an opening;
   a smoke shaft comprising a tubular smoke shaft section extending through the opening such that a gap is between the smoke shaft section and a floor or roof structure, in particular between the smoke shaft section and side faces of the opening;
a seal structure around the smoke shaft section in the gap in particular for sealing the gap. The seal structure comprises
a sealing layer made of or at least comprising intumescent material, which sealing layer extends around the smoke shaft section; and
a heat insulation material layer comprising heat insulation material, which insulation material layer extends around the sealing layer between the sealing layer and the floor or roof structure, the heat insulation material preferably being mineral fibers.

The seal structure comprises an elongated flexible heat insulation member, which forms said heat insulation material layer.

The elongated heat insulation member is a rope comprising fire-proof fibers, preferably mineral fibers.

With this kind of solution one or more of the above-mentioned objects can be facilitated.

The solution is technically advantageous, because the heat insulation layer provides a heat insulation preventing heat from transmitting from the smoke shaft heated in case of fire. The sealing layer comprising intumescent material on the other hand is able to expand as a result of substantial rise of temperature in case of fire so that it compresses against the insulation material layer and fills any existing and/or emerging spaces inside or around the insulation material layer. Thus, it can for example compensate any dimensional changes or voids inside or around the insulation material layer. It has been noticed that such dimensional changes or voids inside or around an insulation material layer can be produced in the heat insulation material, and particularly in high temperatures such as by shrinkage of the heat insulation material. The structure of this solution is also swift and efficient to form.

Preferable further details of the smoke shaft arrangement are introduced in the following, which further details can be combined with smoke shaft arrangement individually or in any combination.

In a preferred embodiment, the seal structure comprises a horizontally, or at least substantially horizontally, oriented elongated flexible sealing band around the smoke shaft section forming said sealing layer. The elongated flexible sealing band extends particularly horizontally, or at least substantially horizontally in the gap around the smoke shaft section.

In a preferred embodiment, the elongated flexible heat insulation member is oriented horizontally, or at least substantially horizontally. Horizontal or at least substantially horizontal orientation is advantageous since this facilitates efficiency of insulation in vertical direction with low space consumption. The elongated flexible heat insulation member extends particularly horizontally, or at least substantially horizontally in the gap around the sealing layer.

In a preferred embodiment, the sealing band extends at least one full round around the smoke shaft section against the outer surface thereof.

In a preferred embodiment, the elongated heat insulation member extends at least one full round, more preferably at least two full rounds, around the sealing layer, in particular around a sealing band forming the sealing layer, against the outer surface thereof. Preferably, said two full rounds comprise consecutive two rounds vertically on top of each other in contact with each other.

In a preferred embodiment, the sealing band has thickness, width and length, the width/thickness ratio being more than 2, more preferably more than 5. The thickness is preferably 5 mm - 50 mm and the width is preferably 30-200 mm.

In a preferred embodiment, thickness of the sealing layer is substantially thinner than the thickness of the heat insulation material layer. This is preferably implemented such that the elongated flexible sealing band is substantially thinner than said flexible heat insulation member, which is preferably a rope comprising fire-proof fibers.

In a preferred embodiment, the sealing layer, in particular a sealing band forming the sealing layer, is attached to the outer surface of the smoke shaft section, preferably by glue.

In a preferred embodiment, the rope comprises fire-proof fibers, preferably mineral fibers, woven together.

In a preferred embodiment, that said intumescent material is or comprises exfoliated graphite or hydrated sodium silicate.

In a preferred embodiment, the seal structure comprises mineral wool in the gap around the smoke shaft section above said insulation material layer and/or said sealing layer, in particular filling the gap above said insulation material layer and/or said sealing layer.

In a preferred embodiment, the smoke shaft arrangement comprises one or more elongated cover bars covering the gap from below. Preferably, said cover bars are angle bars comprising a first face fixed against a vertical face of the smoke shaft and second face fixed against a bottom face of the floor or roof structure.

In a preferred embodiment, the smoke shaft arrangement it comprises plurality of tubular smoke shaft sections piled on top of each other in alignment such that their smoke guiding channels together form a continuous vertically oriented smoke guiding channel, said plurality including the aforementioned smoke shaft section extending through the opening. This kind of multi-sectional solution is advantageous together with the seal structure as described in this application. Particularly, the sealing layer is easy to provide on the smoke shaft, e.g. beforehand.

In a preferred embodiment, the smoke shaft section comprises plurality of walls in connection with each other and arranged to border a hollow upwards and downwards open smoke guiding channel, wherein preferably each said wall has a sandwich structure and comprises a first face sheet forming an outer face of the wall and a second face sheet forming an inner face of the wall, and an insulation layer between said first face sheet and said second face sheet.

In a preferred embodiment, the elongated flexible heat insulation member is positioned such that it extends against the side faces of the opening.

In a preferred embodiment, the elongated flexible heat insulation member fills the gap between the sealing layer comprising intumescent material and the side faces of the opening.

In a preferred embodiment, the elongated flexible heat insulation member has been bent to extend continuously around plurality of corners between adjacent walls of the shaft section.

In a preferred embodiment, the elongated flexible sealing band has been bent to extend continuously around plurality of corners between adjacent walls of the shaft section.

It is also brought forward a new method of fabricating a smoke shaft arrangement, which is in particular as described anywhere above and/or in any of the claims. The method comprises providing a smoke shaft section; arranging a sealing layer made of or at least comprising intumescent material around the smoke shaft section; and thereafter inserting the smoke shaft section in an opening of a floor structure or a roof structure such that the sealing layer is in a gap between the smoke shaft section and a floor or roof structure; and arranging an insulation material layer around the sealing layer, in particular before, during or after said inserting, wherein the insulation material layer comprises heat insulation material, the heat insulation material preferably being mineral fibers.

Said heat insulation material layer is formed by an elongated flexible heat insulation member.

The elongated flexible heat insulation member is a rope comprising fire-proof fibers, preferably mineral fibers.

With this kind of solution one or more of the above-mentioned objects can be facilitated.

Preferable further details of the method have been introduced above as well as will be introduced in the following, which further details can be combined with the method individually or in any combination.

In a preferred embodiment, the said sealing layer is formed by an elongated flexible sealing band. The elongated flexible sealing band is preferably arranged in said arranging to extend horizontally, or at least substantially horizontally, oriented around the smoke shaft section.

In a preferred embodiment, the sealing layer, in particular a sealing band forming the sealing layer, is attached in said arranging to the outer surface of the smoke shaft section, preferably by glue.

In a preferred embodiment, the elongated insulation member is arranged in said arranging to extend horizontally, or at least substantially horizontally, oriented at least one full round, more preferably at least two full rounds, around the sealing layer, in particular around the sealing band forming the sealing layer, against the outer surface thereof.

In a preferred embodiment, the elongated heat insulation member is a rope comprising fire-proof fibers, preferably mineral fibers, woven together.

In a preferred embodiment, the method comprises arranging mineral wool in the gap around the smoke shaft section above said insulation material layer, in particular above the insulation member forming it, and/or above said sealing layer, in particular above the sealing band forming it, in particular to fill the gap above said insulation material layer and/or said sealing layer.

In a preferred embodiment, the method comprises fixing one or more cover bars to cover the gap from below and/or fixing one or more cover bars to cover the gap from above.

In a preferred embodiment, the method said inserting the smoke shaft section is lowered from above in the opening to rest on top of another smoke shaft section.

In a preferred embodiment, the method comprises piling plurality of tubular smoke shaft sections on top of each other in alignment such that their smoke guiding channels together form a continuous vertically oriented smoke guiding channel.

In a preferred embodiment, the method comprises fabricating a smoke shaft arrangement, which is in particular as described anywhere above and/or in any of the claims of the application.

### Brief description of the drawings

In the following, the present invention will be described in more detail by way of example and with reference to the attached drawings, in which
FIG. 1 illustrates an embodiment of a smoke shaft arrangement.
FIG. 2 illustrates a detailed and enlarged sectional view of Figure 1 at the point of a smoke shaft section and a floor or roof structure.
FIG. 3 illustrates preferred details of the arrangement of Figures 1-2, more specifically how the sealing layer, insulation material layer and the smoke shaft section are arranged, the structures surrounding these features being omitted from the view.
Figure 4 illustrates preferred further details of a sealing band forming a sealing layer of Figures 1-3.
Figure 5 illustrates preferred further details of a heat insulation member forming a heat insulation material layer of Figures 1-3.
Figures 6-9 illustrate phases of an embodiment of a method of fabricating a smoke shaft arrangement, Figure 9 also illustrating preferred further details of the arrangement of Figures 1-3.

### Detailed description

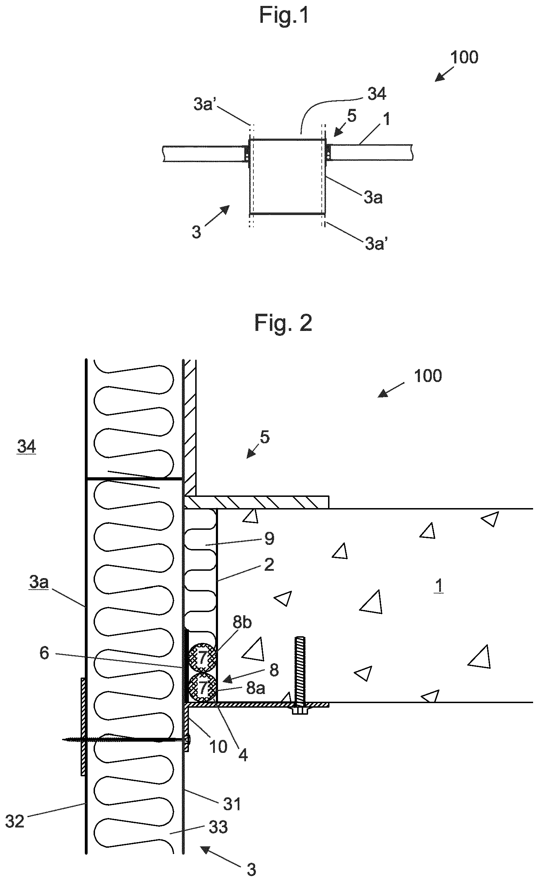

Figure 1 illustrates an embodiment of a smoke shaft arrangement 100 comprising a floor structure or roof structure 1 comprising an opening 2. Figure 2 illustrates a detailed and enlarged sectional view of Figure 1.

The floor structure or roof structure 1 is particularly preferably a horizontal floor plate or a horizontal roof plate. The smoke shaft 3 comprises a tubular smoke shaft section 3a extending through the opening 2 such that a gap 4 is in horizontal direction between the smoke shaft section 3a and a floor or roof structure 1.

The smoke shaft arrangement 100 is such that it comprises plurality of tubular smoke shaft sections 3a,3a' piled on top of each other in alignment such that their smoke guiding channels 34 together form a continuous vertically oriented smoke guiding channel, said plurality including the aforementioned smoke shaft section 3a extending through the opening 2.

The smoke shaft arrangement 100 comprises an seal structure 5 around the smoke shaft section 3a in the gap 4 in particular for sealing the gap 4.

The seal structure 5 comprises, as visible in Figure 2, a sealing layer 6, which sealing layer 6 extends in the gap 4 around the smoke shaft section 3a. The sealing layer 6 is made of or at least comprises intumescent material.

The seal structure 5 further comprises an insulation material layer 8 comprising heat insulation material 7, which insulation material layer 8 extends in the gap 4 around the sealing layer 6 between the sealing layer 6 and the floor or roof structure 1. The insulation material is preferably mineral fibers.

The sealing layer 6 and the insulation material layer 8 around it form a layered seal structure, which is highly efficient in terms of heat insulation and sealing ability.

The sealing layer 6 comprising intumescent material has the effect that it swells as a result of heat exposure. Thus, in case of fire, the sealing layer 6 is able to expand so that it compresses against the insulation material layer 8 and fills any existing and/or emerging spaces inside or around the insulation material layer 8. Harmful dimensional changes, in particular shrinkage, can occur in the heat insulation material layer 8 when heat rises strongly. This is noticed to be the case for example with materials comprising mineral fiber. So, with heat insulation material layer 8 when made of material sensitive to dimensional changes, even slight, the solution is very advantageous. It has been noticed that when the heat insulation material layer 8 comprises mineral fibers, dimensional changes, in particular shrinkage is likely to occur in high temperatures and the resulting voids or spaces can be eliminated effectively with the described sealing layer (6.

In the embodiment of Figure 1, the seal structure 5 comprises mineral wool 9 in the gap 4 around the smoke shaft section 3a above said insulation material layer 8, in particular above the insulation member 8 forming it, and also above said sealing layer 6, in particular above the sealing band 6 forming it. The mineral wool 9 fills the gap 4 above said insulation member 8 and said sealing band 6.

In the embodiment of Figure 1, the arrangement comprises one or more elongated cover bars 10 covering the gap 4 from below. Said cover bars 10 are in the preferred embodiments, angle bars comprising a first face fixed against a vertical face of the smoke shaft 3 and second face fixed against a bottom face of the floor structure or roof structure 1. Said angle bars 10 are hereby able to cover the gap 4 from below as well as support the parts of the arrangement to keep them from moving relative to each other.

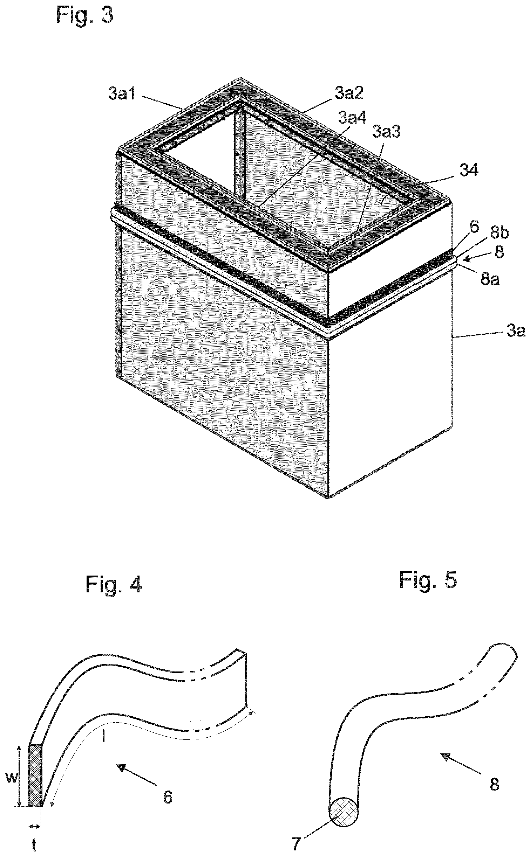

Figure 3 illustrates preferred further details of the arrangement 100 of Figures 1-2, and more specifically of the sealing layer 6, insulation material layer 8 and the smoke shaft section 3a. In the embodiment of Figure 3, the seal structure 5 comprises a horizontally, or at least substantially horizontally, oriented elongated flexible sealing band 6 around the smoke shaft section 3a forming said sealing layer 6. Such a member is easy and efficient to provide around the smoke shaft section 3a. The elongated flexible sealing band 6 is particularly advantageous when the shaft section 3a has plurality of walls 3a1,3a2,3a3,3a4 since it can form an easily installable structure that can be bent to extend continuously (i.e. as a uniform uninterrupted structure) around plurality of corners between adjacent walls of the shaft section 3a.

Moreover, the seal structure 5 comprises an elongated flexible heat insulation member 8, which forms said insulation material layer 8. The elongated flexible heat insulation member 8 is in the preferred embodiment a rope comprising fire-proof fibers, preferably mineral fibers. The elongated flexible heat insulation member 8 being a rope provides that it can be simply handled and placed around the sealing layer 6. A rope is advantageous also when the shaft section 3a has plurality of walls 3a1,3a2,3a3,3a4 since it can form an easily installable structure that can be bent to extend continuously (i.e. as a uniform uninterrupted structure) around plurality of corners between adjacent walls of the shaft section 3a. The elongated flexible heat insulation member 8 is in the preferred embodiment moreover horizontally, or at least substantially horizontally, oriented. Such a member is easy and efficient to provide around the sealing layer 6. Thus, the sealing layer 6 and insulation material layer 8 are easy and efficient to provide.

In the embodiment of Figure 3, the sealing band 6 extends at least one full round around the smoke shaft section 3a against the outer surface thereof. The sealing band 6 is flexible whereby it is easy to bend around the smoke shaft section 3a and to maintain in tightly around it.

In the embodiment of Figure 3, the elongated insulation member 8 extends at least one full round, more preferably at least two full rounds, around the sealing layer 6, in particular around the sealing band 6 forming the sealing layer, against the outer surface of the sealing layer 6. Said two full rounds comprise consecutive two rounds 8a,8b vertically on top of each other in contact with each other. The elongated insulation member 8 is flexible whereby it is easy to bend around the sealing layer 6 and to maintain in tightly around it.

In the preferred embodiments, the sealing layer 6, in particular the sealing band 6 forming the sealing layer, is attached to the outer surface of the smoke shaft section 3a, preferably by glue. Thus, it maintains well its position and it is easy to install, in particular already before inserting the smoke shaft section 3a into an opening 2 of the structure 1.

In the preferred embodiments, the elongated flexible heat insulation member 8 is positioned such that it extends against the side faces of the opening 2. In this case, with small amount of parts an effective sealing is achieved. This is also facilitated such that in the preferred embodiment the elongated flexible heat insulation member 8 fills the gap between the sealing layer 6 comprising intumescent material and the side faces of the opening 2.

Figure 4 illustrates preferred further details of the sealing band 6. As illustrated, it has thickness t, width w and length |. In the preferred embodiments, the width/thickness ratio is more than 2, more preferably more than 5. This kind of wide band provides effect on a relatively large area without forming very thick layer and hereby it facilitates sealed connection yet without taking much space or otherwise disturbing heat insulation effect of the heat insulation layer which is intended to serve as the main component for this purpose. The thickness is preferably 5 mm - 50 mm and the width is preferably 30-200 mm. In the preferred embodiments, the width-directional side is placed against the smoke shaft section 3a.

Figure 5 illustrates preferred further details of the elongated insulation member 8. As illustrated, the elongated insulation member 8 is a rope comprising fire-proof fibers, preferably mineral fibers, woven together. Such ropes are commercially available, such as components known as "a joint filling rope".

Generally, it is preferable that the smoke shaft section 3a comprises plurality of walls 3a1,3a2,3a3,3a4 in connection with each other and arranged to border a hollow upwards and downwards open smoke guiding channel 34. Preferably, although not necessarily, each said wall 3a1,3a2,3a3,3a4 has a sandwich structure and comprises a first face sheet 31 forming an outer face of the wall 3a1,3a2,3a3,3a4 and a second face sheet 32 forming an inner face of the wall 3a1,3a2,3a3,3a4, and an insulation layer 33 between said first face sheet 31 and said second face sheet 32. Said face sheets are preferably metal sheets. The insulation layer 33 can comprise mineral wool, for example.

Generally, it is said intumescent material can be any suitable material. It can be or comprise exfoliated graphite or hydrated sodium silicate, for example, but also other alternatives are known. Intumescent material bands are commercially available, such as by trademark Kerafix Flexpress.

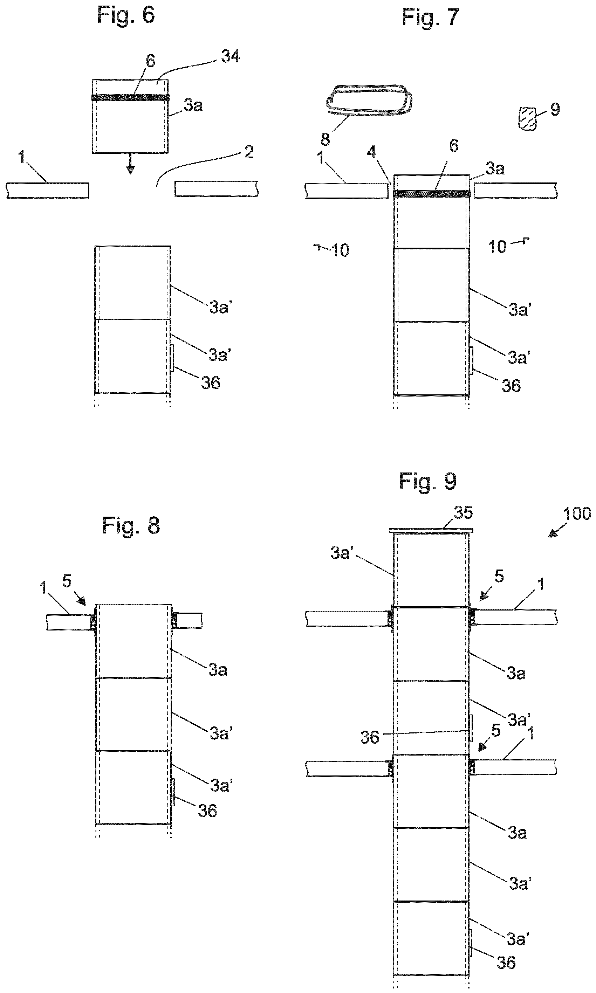

Figure 9 illustrates further preferred details of the smoke shaft arrangement 100. The smoke shaft arrangement 100 preferably comprises a hatch 35 on top of the uppermost smoke shaft section, as illustrated in Figure 9. The smoke shaft arrangement 100, in particular one or more smoke shaft sections 3a,3a' thereof, preferably comprises one or more smoke inlets 36 leading into the smoke channel 34 of the smoke shaft section in question, as illustrated in Figure 9. The smoke inlets 36 preferably comprise an openable hatch covering them.

Figures 6-9 illustrate phases of an embodiment of a method for fabricating a smoke shaft arrangement 100 as described anywhere above referring to Figures 1-5. The method comprises providing a smoke shaft section 3a and arranging a sealing layer 6 made of or at least comprising intumescent material around the smoke shaft section 3a. This step has been illustrated in Figure 6. Said sealing layer 6 is preferably formed by an elongated flexible sealing band 6 which is arranged in said arranging to extend horizontally, or at least substantially horizontally, oriented around the smoke shaft section 3a.

After said arranging a sealing layer 6, the method comprises inserting the smoke shaft section 3a in an opening 2 of a floor structure or a roof structure 1 such that the sealing layer 6 is in a gap 4 between the smoke shaft section 3a and a floor or roof structure 1.

In said inserting the smoke shaft section 3a is lowered from above in the opening 2 to rest on top of another smoke shaft section 3a', as illustrated in Figure 6 by arrow a1.

After said inserting, the method comprises fixing one or more elongated cover bars 10 to cover the gap 4 from below. Said cover bars 10 are preferably angle bars comprising a first face that is fixed against a vertical face of the smoke shaft section 3a and second face that is fixed against a bottom face of the floor or roof structure 1.

After said fixing, the method comprises arranging an insulation material layer 8 around the sealing layer 6, wherein the insulation material layer 8 comprises heat insulation material 7, the heat insulation material 7 preferably being mineral fibers. Said heat insulation material layer 8 is preferably formed by an elongated flexible heat insulation member 8. The elongated insulation member 8 is preferably arranged to extend horizontally, or at least substantially horizontally, oriented at least one full round, more preferably at least two full rounds, around the sealing layer 6, in particular around the sealing band 6 forming the sealing layer, against the outer surface thereof. The elongated insulation member 8 is preferably a rope as described elsewhere in the application.

After said arranging an insulation material layer 8 around the sealing layer 6, the method comprises arranging mineral wool 9 in the gap 4 around the smoke shaft section 3a above said insulation material layer 8, in particular above the insulation member 8 forming it, and/or above said sealing layer 6, in particular above the sealing band 6 forming it, in particular to fill the gap 4 above said insulation material layer 8 and/or said sealing layer 6. The details of the seal structure 5 are illustrated more specifically in Figure 2.

The method is in general preferably such that the method comprises piling plurality of tubular smoke shaft sections 3a,3a' on top of each other in alignment such that their smoke guiding channels 34 together form a continuous vertically oriented smoke guiding channel.

The method preferably moreover comprises installing a hatch 35 on top of the uppermost smoke shaft section 3a'.

In the method as described above, the step of arranging an insulation material layer 8 around the sealing layer 6, is performed during or after said inserting. However, it is alternatively possible to perform said step arranging an insulation material layer 8 around the sealing layer 6 before said inserting.

Generally, the smoke shaft can extend through any number of openings 2 formed in floor structures 1 and/or roof structures 1, whereby it could extend through one or more fire compartments. The smoke shaft 3 could for example extend through openings 2 formed in more than one floor structures 1 and/or an opening 2 formed in a roof structure. The smoke shaft arrangement 100 can comprise a seal structure 5 as described around a smoke shaft section 3a at the point of each said opening 2.

Generally, the smoke shaft is for guiding smoke and/or other gaseous substances such as ventilation air in case of fire. It is primarily for this use, and not for serving as a chimney of a fireplace, whereby it is not connected to a fire place.

In general, when the elongated flexible heat insulation member 8 is oriented substantially horizontally, it is preferably oriented to extend at only a slight angle relative to horizontal. Horizontal or at least substantially horizontal orientation of the insulation member 8 is advantageous since this facilitates efficiency of insulation in vertical direction with low consumption of space and material. Said angle is preferably smaller than 5 degrees, more preferably smaller than 3 degrees. The slight angle may be needed when the elongated insulation member 8 extends more than one full round around the sealing layer 6.

In general, when elongated flexible sealing band 6 is oriented substantially horizontally, it is preferably oriented to extend at only a slight angle relative to horizontal. Horizontal or at least substantially horizontal orientation of the sealing band 6 is advantageous since this facilitates efficiency of its sealing ability in vertical direction with low consumption of space and material. Said angle is preferably smaller than 5 degrees, more preferably smaller than 3 degrees. The slight angle may be needed when the sealing band 6 extends more than one full round around the sealing layer 6.

It is to be understood that the above description and the accompanying Figures are only intended to teach the best way known to the inventors to make and use the invention. It will be apparent to a person skilled in the art that the inventive concept can be implemented in various ways. The above-described embodiments of the invention may thus be modified or varied, without departing from the invention, as appreciated by those skilled in the art in light of the above teachings. It is therefore to be understood that the invention and its embodiments are not limited to the examples described above but may vary within the scope of the claims.

## Claims

1. A smoke shaft arrangement (100) comprising
a floor or roof structure (1) comprising an opening (2);
a smoke shaft (3) comprising a tubular smoke shaft section (3a) extending through the opening (2) such that a gap (4) is between the smoke shaft section (3a) and a floor or roof structure (1), in particular between the smoke shaft section (3a) and side faces of the opening (2); and
a seal structure (5) around the smoke shaft section (3a) in the gap (4);
whereby the seal structure (5) comprises
a sealing layer (6) comprising intumescent material, which sealing layer (6) extends around the smoke shaft section (3a); and
a heat insulation material layer (8) comprising heat insulation material (7), which heat insulation material layer (8) extends around the sealing layer (6) between the sealing layer (6) and the floor or roof structure (1), the heat insulation material (7) preferably being mineral fibers,
**characterized in that**
the seal structure (5) comprises an elongated flexible heat insulation member (8), which forms said heat insulation material layer (8), wherein the elongated flexible heat insulation member (8) is a rope comprising fire-proof fibers, preferably mineral fibers.

2. A smoke shaft arrangement according to claim 1, **characterized in that** the smoke shaft section (3a) comprises plurality of walls (3a1,3a2,3a3,3a4) in connection with each other and arranged to border a hollow upwards and downwards open smoke guiding channel (34), wherein preferably each said wall (3a1,3a2,3a3,3a4) has a sandwich structure and comprises a first face sheet (31) forming an outer face of the wall (3a1,3a2,3a3,3a4) and a second face sheet (32) forming an inner face of the wall (3a1,3a2,3a3,3a4), and an insulation layer (33) between said first face sheet (31) and said second face sheet (32).

3. A smoke shaft arrangement according to any of the preceding claims, **characterized in that** the seal structure (5) comprises a horizontally, or at least substantially horizontally, oriented elongated flexible sealing band (6) around the smoke shaft section (3a) forming said sealing layer (6).

4. A smoke shaft arrangement according to any of the preceding claims, **characterized in that** the elongated flexible heat insulation member (8) is horizontally, or at least substantially horizontally oriented).

5. A smoke shaft arrangement according to any of the preceding claims, **characterized in that** the sealing band (6) extends at least one full round around the smoke shaft section (3a) against the outer surface thereof.

6. A smoke shaft arrangement according to any of the preceding claims, **characterized in that** the elongated insulation member (8) extends at least one full round, more preferably at least two full rounds, around the sealing layer (6), in particular around a sealing band (6) forming the sealing layer (6), against the outer surface thereof.

7. A smoke shaft arrangement according to any of the preceding claims, **characterized in that** the elongated insulation member (8) extends at least two full rounds around the sealing layer (6), in particular around a sealing band (6) forming the sealing layer (6), against the outer surface thereof.

8. A smoke shaft arrangement according to any of the preceding claims, **characterized in that** the sealing layer (6), in particular a sealing band (6) forming the sealing layer (6), is attached to the outer surface of the smoke shaft section (3a), preferably by glue.

9. A smoke shaft arrangement according to any of the preceding claims, **characterized in that** the rope comprises fire-proof fibers, preferably mineral fibers, woven together.

10. A smoke shaft arrangement according to any of the preceding claims, **characterized in that** said intumescent material is or comprises exfoliated graphite or hydrated sodium silicate.

11. A smoke shaft arrangement according to any of the preceding claims, **characterized in that** the seal structure (5) comprises mineral wool (9) in the gap (4) around the smoke shaft section (3a) above said insulation material layer (8) and/or said sealing layer (6), in particular filling the gap (4) above said insulation material layer (8) and/or said sealing layer (6).

12. A smoke shaft arrangement according to any of the preceding claims, **characterized in that** it comprises one or more elongated cover bars (10) covering the gap (4) from below.

13. A smoke shaft arrangement according to any of the preceding claims, **characterized in that** it comprises plurality of tubular smoke shaft sections (3a,3a') piled on top of each other in alignment such that their smoke guiding channels (34) together form a continuous vertically oriented smoke guiding channel, said plurality including the aforementioned smoke shaft section (3a) extending through the opening (2).

14. A method of fabricating a smoke shaft arrangement (100) according to any of the preceding claims, whereby the method comprises
providing a tubular smoke shaft section (3a);
arranging a sealing layer (6) made of or at least comprising intumescent material around the tubular smoke shaft section (3a); and thereafter
inserting the smoke shaft section (3a) in an opening (2) of a floor structure or a roof structure (1) such that the sealing layer (6) is in a gap (4) between the tubular smoke shaft section (3a) and a floor or roof structure (1); and
arranging an insulation material layer (8) around the sealing layer (6), in particular before, during or after said inserting, wherein the insulation material layer (8) comprises heat insulation material (7), the heat insulation material (7) preferably being mineral fibers,
**characterized in that**
said heat insulation material layer (8) is formed by an elongated flexible heat insulation member (8), wherein the elongated flexible insulation member (8) is a rope comprising fire-proof fibers, preferably mineral fibers.

15. A method according to any of the preceding claims, **characterized in that** the method comprises arranging mineral wool in the gap (4) around the tubular smoke shaft section (3a) above said insulation material layer (8) and/or said sealing layer (6).

16. A method according to any of the preceding claims, **characterized in that** in said inserting the smoke shaft section (3a) is lowered from above in the opening (2) to rest on top of another smoke shaft section (3a').

## Patentansprüche

1. Rauchschachtanordnung (100), aufweisend
eine Bodenstruktur oder eine Dachstruktur (1), welche eine Öffnung (2) aufweist;
einen Rauchschacht (3), welcher einen rohrförmigen Rauchschachtabschnitt (3a) aufweist, wobei sich der Rauchschachtabschnitt (3a) derart durch die Öffnung (2) erstreckt, dass ein Spalt (4) zwischen dem Rauchschachtabschnitt (3a) und einer Bodenstruktur oder einer Dachstruktur (1), insbesondere zwischen dem Rauchschachtabschnitt (3a) und Seitenflächen der Öffnung (2), angeordnet ist; und
eine Dichtungsstruktur (5) in diesem Spalt (4) rund um den Rauchschachtabschnitt (3a);
wobei die Dichtungsstruktur (5) eine Dichtungsschicht (6) aufweist, wobei die Dichtungsschicht (6) ein anschwellendes Material aufweist und sich rund um den Rauchschachtabschnitt (3a) erstreckt; und
wobei sich eine Wärmedämmungsmaterialschicht (8), welche einen Wärmedämmstoff (7) aufweist, zwischen der Dichtungsschicht (6) und der Bodenstruktur oder der Dachstruktur (1) rund um die Dichtungsschicht (6) erstreckt, wobei der Wärmedämmstoff (7) vorzugsweise Materialfasern sind,
**dadurch gekennzeichnet, dass** die Dichtungsstruktur (5) ein längserstrecktes flexibles Wärmedämmungselement (8) aufweist, welches die Wärmedämmungsmaterialschicht (8) bildet, wobei das längserstreckte Wärmedämmungselement (8) ein Seil ist, welches feuerfeste Fasern, vorzugsweise Mineralfasern, aufweist.

2. Rauchschachtanordnung nach Anspruch 1, **dadurch gekennzeichnet, dass** der Rauchschachtabschnitt (3a) eine Mehrzahl miteinander verbundener Wände (3a1, 3a2, 3a3, 3a4) aufweist, welche dafür eingerichtet sind, einen nach oben und nach unten offenen Rauchführungskanal (34) einzufassen, wobei vorzugsweise jede der Wände (3a1, 3a2, 3a3, 3a4) eine geschichtete Struktur aufweist und eine erste Deckschicht (31), welche eine Außenfläche der Wand (3a1, 3a2, 3a3, 3a4) bildet, und eine zweite Deckschicht (32), welche eine Innenfläche der Wand (3a1, 3a2, 3a3, 3a4) bildet, sowie eine Dämmungsschicht (33) zwischen der ersten Deckschicht (31) und der zweiten Deckschicht (32) aufweist.

3. Rauchschachtanordnung nach einem der vorstehenden Ansprüche, **dadurch gekennzeichnet, dass** die Dichtungsstruktur (5) ein horizontal, oder mindestens im Wesentlichen horizontal, ausgerichtetes längserstrecktes flexibles Dichtungsband (6) rund um den Rauchschachtabschnitt (3a) aufweist, welches die Dichtungsschicht (6) bildet.

4. Rauchschachtanordnung nach einem der vorstehenden Ansprüche, **dadurch gekennzeichnet, dass** das längserstreckte flexible Wärmedämmungselement (8) horizontal, oder mindestens im Wesentlichen horizontal, ausgerichtet ist.

5. Rauchschachtanordnung nach einem der vorstehenden Ansprüche, **dadurch gekennzeichnet, dass** sich das Dichtungsband (6) an der Außenfläche des Rauchschachtabschnitts (3a) mindestens eine vollständige Runde um diesen herum erstreckt.

6. Rauchschachtanordnung nach einem der vorstehenden Ansprüche, **dadurch gekennzeichnet, dass** sich das längserstreckte Dämmungselement (8) an der Außenfläche der Dichtungsschicht (6) mindestens eine vollständige Runde, noch bevorzugter mindestens zwei vollständige Runden, um diese herum erstreckt, vorzugsweise rund um ein Dichtungsband (6), welches die Dichtungsschicht (6) bildet.

7. Rauchschachtanordnung nach einem der vorstehenden Ansprüche, **dadurch gekennzeichnet, dass** sich das längserstreckte Dämmungselement (8) an der Außenfläche der Dichtungsschicht (6) mindestens zwei vollständige Runden um diese herum erstreckt, vorzugsweise rund um ein Dichtungsband (6), welches die Dichtungsschicht (6) bildet.

8. Rauchschachtanordnung nach einem der vorstehenden Ansprüche, **dadurch gekennzeichnet, dass** die Dichtungsschicht (6), vorzugsweise ein Dichtungsband (6), welches die Dichtungsschicht (6) bildet, vorzugsweise mit Hilfe von Klebstoff an der Außenfläche des Rauchschachtabschnitts (3a) angebracht ist.

9. Rauchschachtanordnung nach einem der vorstehenden Ansprüche, **dadurch gekennzeichnet, dass** das Seil miteinander verwobene feuerfeste Fasern, vorzugsweise Mineralfasern, aufweist.

10. Rauchschachtanordnung nach einem der vorstehenden Ansprüche, **dadurch gekennzeichnet, dass** das anschwellende Material Blähgraphit oder hydriertes Natriumsilikat ist oder enthält.

11. Rauchschachtanordnung nach einem der vorstehenden Ansprüche, **dadurch gekennzeichnet, dass** die Dichtungsstruktur (5) im Spalt (4) rund um den Rauchschachtabschnitt (3a) über der Dämmstoffschicht (8) und/oder der Dichtungsschicht (6) Mineralwolle (9) aufweist, welche insbesondere den Spalt (4) über der Dämmstoffschicht (8) und/oder der Dichtungsschicht (6) ausfüllt.

12. Rauchschachtanordnung nach einem der vorstehenden Ansprüche, **dadurch gekennzeichnet, dass** sie eine oder mehrere längserstreckte Deckleisten (10) aufweist, welche den Spalt (4) von unten abdecken.

13. Rauchschachtanordnung nach einem der vorstehenden Ansprüche, **dadurch gekennzeichnet, dass** sie eine Mehrzahl rohrförmiger Rauschschachtabschnitte (3a, 3a') aufweist, welche in einer derartigen Ausrichtung übereinandergestapelt sind, dass ihre Rauchführungskanäle (34) zusammen einen durchgehenden, vertikal ausgerichteten Rauchführungskanal bilden, wobei sich die Mehrzahl der obengenannten Rauchschachtabschnitte (3a) durch die Öffnung (2) erstrecken.

14. Verfahren zum Herstellen einer Rauchschachtanordnung (100) nach einem der vorstehenden Ansprüche, wobei das Verfahren umfasst:
Bereitstellen eines rohrförmigen Rauchfangabschnitts (3a);
Anordnen einer Dichtungsschicht (6) gebildet aus oder mindestens aufweisend ein aufschwellendes Material rund um den rohrförmigen Rauchfangabschnitt (3a); und dann
Einführen des Rauchschachtabschnitts (3a) in eine Öffnung (2) einer Bodenstruktur oder einer Dachstruktur (1), sodass die Dichtungsschicht (6) in einem Spalt (4) zwischen dem rohrförmigen Rauchfangabschnitt (3a) und einer Bodenstruktur oder einer Dachstruktur (1) angeordnet ist; und
Anordnen einer Dämmstoffschicht (8) rund um die Dichtungsschicht (6), insbesondere vor, während oder nach dem Einführen, wobei die Dämmstoffschicht (8) Wärmedämmungsmaterial (7) aufweist und das Wärmedämmungsmaterial (7) vorzugsweise Mineralfasern sind,
**dadurch gekennzeichnet, dass** die Wärmedämmungsmaterialschicht (8) durch ein längserstrecktes flexibles Wärmedämmungselement (8) gebildet ist, wobei das längserstreckte flexible Dämmungselement (8) ein Seil ist, welches feuerfeste Fasern, vorzugsweise Mineralfasern, aufweist.

15. Verfahren nach einem der vorstehenden Ansprüche, **dadurch gekennzeichnet, dass** das Verfahren das Anordnen von Mineralwolle in dem Spalt (4) rund um den rohrförmigen Rauchfangabschnitt (3a) über der Dämmstoffschicht (8) und/oder der Dichtungsschicht (6) umfasst.

16. Verfahren nach einem der vorstehenden Ansprüche, **dadurch gekennzeichnet, dass** der Rauchschachtabschnitt (3a) beim Einführen desselben von oben soweit in die Öffnung (2) abgesenkt wird, dass er auf einem weiteren Rauchschachtabschnitt (3a') zu liegen kommt.

## Revendications

1. Agencement de conduit de fumée (100), comprenant
une structure de plancher ou de toit (1) comprenant une ouverture (2) ;
un conduit de fumée (3) comprenant une section de conduit de fumée tubulaire (3a) qui s'étend à travers l'ouverture (2) de telle sorte qu'un intervalle (4) existe entre la section de conduit de fumée (3a) et une structure de plancher ou de toit (1), en particulier entre la section de conduit de fumée (3a) et les faces latérales de l'ouverture (2) ; et
une structure d'étanchéité (5) autour de la section de conduit de fumée (3a) dans l'intervalle (4) ;
dans lequel la structure d'étanchéité (5) comprend
une couche d'étanchéité (6) comprenant un matériau intumescent, laquelle couche d'étanchéité (6) s'étendant autour de la section de conduit de fumée (3a) ; et
une couche de matériau d'isolation thermique (8) comprenant un matériau d'isolation thermique (7), laquelle couche de matériau d'isolation thermique (8) s'étendant autour de la couche d'étanchéité (6) entre la couche d'étanchéité (6) et la structure de plancher ou de toit (1), le matériau d'isolation thermique (7) étant de préférence constitué de fibres minérales,
**caractérisé en ce que** la structure d'étanchéité (5) comprend un élément d'isolation thermique flexible allongé (8) qui forme ladite couche de matériau d'isolation thermique (8), dans lequel l'élément d'isolation thermique flexible allongé (8) est une corde comprenant des fibres ignifuges, de préférence des fibres minérales.

2. Agencement de conduit de fumée selon la revendication 1, **caractérisé en ce que** la section de conduit de fumée (3a) comprend une pluralité de parois (3a1, 3a2, 3a3, 3a4) en connexion les unes avec les autres et agencées pour délimiter un canal de guidage de fumée (34) creux ouvert vers le haut et vers le bas, dans lequel chaque dite paroi (3a1, 3a2, 3a3, 3a4) présente de préférence une structure en sandwich et comprend une première feuille de face (31) formant une face externe de la paroi (3a1, 3a2, 3a3, 3a4) et une deuxième feuille de face (32) formant une face interne de la paroi (3a1, 3a2, 3a3, 3a4), et une couche d'isolation (33) entre ladite première feuille de face (31) et ladite deuxième feuille de face (32).

3. Agencement de conduit de fumée selon l'une quelconque des revendications précédentes, **caractérisé en ce que** la structure d'étanchéité (5) comprend une bande d'étanchéité flexible allongée (6) orientée horizontalement, ou au moins substantiellement horizontalement, autour de la section de conduit de fumée (3a) formant ladite couche d'étanchéité (6).

4. Agencement de conduit de fumée selon l'une quelconque des revendications précédentes, **caractérisé en ce que** l'élément d'isolation thermique flexible allongé (8) est orienté horizontalement, ou au moins substantiellement horizontalement.

5. Agencement de conduit de fumée selon l'une quelconque des revendications précédentes, **caractérisé en ce que** la bande d'étanchéité (6) s'étend au moins sur un tour complet autour de la section de conduit de fumée (3a) contre sa surface externe.

6. Agencement de conduit de fumée selon l'une quelconque des revendications précédentes, **caractérisé en ce que** l'élément d'isolation allongé (8) s'étend sur au moins un tour complet, préférablement sur au moins deux tours complets, autour de la couche d'étanchéité (6), en particulier autour d'une bande d'étanchéité (6) formant la couche d'étanchéité (6), contre sa surface externe.

7. Agencement de conduit de fumée selon l'une quelconque des revendications précédentes, **caractérisé en ce que** l'élément d'isolation allongé (8) s'étend sur au moins deux tours complets autour de la couche d'étanchéité (6), en particulier autour d'une bande d'étanchéité (6) formant la couche d'étanchéité (6), contre sa surface externe.

8. Agencement de conduit de fumée selon l'une quelconque des revendications précédentes, **caractérisé en ce que** la couche d'étanchéité (6), en particulier une bande d'étanchéité (6) formant la couche d'étanchéité (6), est attachée à la surface externe de la section de conduit de fumée (3a), de préférence par de la colle.

9. Agencement de conduit de fumée selon l'une quelconque des revendications précédentes, **caractérisé en ce que** la corde comprend des fibres ignifuges, de préférence des fibres minérales, tissées ensemble.

10. Agencement de conduit de fumée selon l'une quelconque des revendications précédentes, **caractérisé en ce que** ledit matériau intumescent est ou comprend du graphite exfolié ou du silicate de sodium hydraté.

11. Agencement de conduit de fumée selon l'une quelconque des revendications précédentes, **caractérisé en ce que** la structure d'étanchéité (5) comprend de la laine minérale (9) dans l'intervalle (4) autour de la section de conduit de fumée (3a) au-dessus de ladite couche de matériau isolant (8) et/ou de ladite couche d'étanchéité (6), en particulier en remplissant l'intervalle (4) au-dessus de ladite couche de matériau isolant (8) et/ou de ladite couche d'étanchéité (6).

12. Agencement de conduit de fumée selon l'une quelconque des revendications précédentes, **caractérisé en ce qu'**il comprend une ou plusieurs barres de recouvrement allongées (10) recouvrant l'intervalle (4) par le bas.

13. Agencement de conduit de fumée selon l'une quelconque des revendications précédentes, **caractérisé en ce qu'**il comprend une pluralité de sections de conduit de fumée tubulaires (3a, 3a') empilées les unes sur les autres en alignement de telle sorte que leurs canaux de guidage de fumée (34) forment ensemble un canal de guidage de fumée continu orienté verticalement, ladite pluralité incluant la section de conduit de fumée susmentionnée (3a) qui s'étend à travers l'ouverture (2).

14. Procédé de fabrication d'un agencement de conduit de fumée (100) selon l'une quelconque des revendications précédentes, dans lequel le procédé comprend
la fourniture d'une section de conduit de fumée tubulaire (3a) ;
l'agencement d'une couche d'étanchéité (6) constituée d'un matériau intumescent, ou au moins comprenant un tel matériau, autour de la section de conduit de fumée tubulaire (3a) ; et ensuite
l'insertion de la section de conduit de fumée (3a) dans une ouverture (2) d'une structure de plancher ou d'une structure de toit (1) de telle sorte que la couche d'étanchéité (6) se trouve dans un intervalle (4) entre la section de conduit de fumée tubulaire (3a) et une structure de plancher ou de toit (1) ; et
l'agencement d'une couche de matériau isolant (8) autour de la couche d'étanchéité (6), en particulier avant, durant ou après ladite l'insertion, dans lequel la couche de matériau isolant (8) comprend un matériau d'isolation thermique (7), le matériau d'isolation thermique (7) étant de préférence constitué de fibres minérales,
**caractérisé en ce que** ladite couche de matériau d'isolation thermique (8) est formée par un élément d'isolation thermique flexible allongé (8), dans lequel l'élément d'isolation flexible allongé (8) est une corde comprenant des fibres ignifuges, de préférence des fibres minérales.

15. Procédé selon l'une quelconque des revendications précédentes, **caractérisé en ce que** le procédé comprend l'agencement de laine minérale dans l'intervalle (4) autour de la section de conduit de fumée tubulaire (3a), au-dessus de ladite couche de matériau isolant (8) et/ou de ladite couche d'étanchéité (6).

16. Procédé selon l'une quelconque des revendications précédentes, **caractérisé en ce que**, lors de ladite insertion, la section de conduit de fumée (3a) est abaissée depuis le haut dans l'ouverture (2) pour reposer sur le dessus d'une autre section de conduit de fumée (3a').
